(19) Europäisches Patentamt
European Patent Office
Office européen des brevets

(11) Veröffentlichungsnummer: **0 260 559**
**A2**

(12) **EUROPÄISCHE PATENTANMELDUNG**

(21) Anmeldenummer: **87113028.2**

(22) Anmeldetag: **07.09.87**

(51) Int. Cl.⁴: **C08L 83/10** , C08L 51/08 , C08L 69/00 , C08L 25/04

(30) Priorität: **17.09.86 DE 3631540**

(43) Veröffentlichungstag der Anmeldung: **23.03.88 Patentblatt 88/12**

(84) Benannte Vertragsstaaten: **DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Kress, Hans-Jürgen, Dr. MOBAY Corp., Platics and Rubber Div. Mobay R.**
**Pittsburgh, PA 15205(US)**
Erfinder: **Lindner, Christian, Dr.**
**Riehler Strasse 200**
**D-5000 Köln 60(DE)**
Erfinder: **Grape, Wolfgang, Dr.**
**Roggendorfstrasse 51**
**D-5000 Köln 80(DE)**
Erfinder: **Peters, Horst, Dr.**
**Winterberg 25**
**D-5090 Leverkusen 3(DE)**
Erfinder: **Schoeps, Jochen, Dr.**
**Windmühlenstrasse 126**
**D-4150 Krefeld(DE)**
Erfinder: **Wittmann, Dieter, Dr.**
**Doerperhofstrasse 15**
**D-4150 Krefeld(DE)**

(54) **Thermoplastische Formmassen mit hoher Alterungsbeständigkeit und guter Tieftemperaturzähigkeit.**

(57) Besonders hochwertige Legierungen aus thermoplastischen Polycarbonaten, Pfropfcopolymerisaten und gegebenenfalls weiteren thermoplastischen Harzen, geeignet als Formmassen, die eine hohe Kältezähigkeit, Alterungs-und Lichtbeständigkeit, besitzen und Formkörper mit ausgezeichneten Oberflächen liefernd, werden erhalten, wenn als Pfropfgrundlage eine Silikonkautschuk eingesetzt wird, in dem neben Kohlenstoff-Doppelbindungen enthaltenden Gruppen auch Schwefel enthaltende Gruppen vorliegen.

EP 0 260 559 A2

## Thermoplastische Formmassen mit hoher Alterungsbeständigkeit und guter Tieftemperaturzähigkeit

Mischungen von Polycarbonat mit Pfropfpolymerisaten von Vinylmonomeren auf Kautschuke und gegebenenfalls thermoplastischen Copolymerisaten aus Vinylmonomeren sind z.B. aus DE-AS 1 170 141, DE-OS 3 336 369, DE-AS 2 259 565 und EP 5202 bekannt.

Aus EP 135 794 sind Formmassen auf Basis von Polydiorganosiloxan-Polycarbonat-Blockcopolymeren und ABS-Polymerisaten bekannt.

Wegen des im ABS einpolymerisierten Diens ist die Alterungs-und Witterungsbeständigkeit solcher Formmassen nicht befriedigend, so daß sie für den Außeneinsatz nur bedingt tauglich sind.

Ersetzt man den oxidationsempfindlichen Dienkautschuk durch einen Alkylacrylatkautschuk, dann ist die Schlagfestigkeit und das Aussehen der Formkörper nicht befriedigend. Für gute physikaliche Eigenschaften müssen die statt des Dienkautschuks eingesetzten Acrylesterkautschuke vernetzt sein. Solche Formmassen sind beschrieben z.B. in GB-PS 1 293 973, DE-OS 2 259 564, US-PS 2 655 824 und US-PS 4 148 842. Ihre Schlagzähigkeit, insbesondere bei tiefen Temperaturen ist für viele Anwendungen, z.B. für Karosserieteile, nicht ausreichend.

Silikonkautschuke zeichnen sich dagegen durch sehr gute Tieftemperatureigenschaften und durch Witterungsbeständigkeit aus. Ihre Bepfropfung mit harzbildenden Monomeren ist aber oftmals schwierig. Entsprechende Pfropfpolymerisate sind beschrieben z.B. in DE-OS 2 539 572 und DE-OS 2 421 288.

Mischungen aus Polycarbonat, einem Harz vom ABS-Typ und kleinen Mengen einer Organosiliciumverbindung, insbesondere Polydimethylsiloxan, sind beschrieben in EP 22979 und US-PS 4 305 856.

In DE-OS 2 659 357 sind Mischungen aus thermoplastischen teilkristallinen Kunststoffen, z.B. Polycarbonat mit Pfropfcopolymerisaten aus mit dem Thermoplasten verträglichen Monomeren und einem gegebenenfalls modifizierten Organopolysiloxan beschrieben. Besonders günstige Ergebnisse werden erhalten, wenn man bei der Herstellung der Pfropfcopolymeren von Organopolysiloxanen ausgeht, die radikalisch angreifbare Gruppen, die zum Wasserstoff-oder Halogentransfer fähig sind und/oder seitenständige Acryl- oder Methacrylgruppen enthalten.

Es hat sich nun gezeigt, daß besonders hochwertige Legierungen aus thermoplastischen Polycarbonaten, Pfropfcopolymerisaten und gegebenenfalls weiteren thermoplastischen Harzen, d.h. Formmassen, die eine hohe Kältezähigkeit, Alterungs-und Lichtbeständigkeit, besitzen und Formkörper mit ausgezeichneten Oberflächen liefern, erhalten werden, wenn als Pfropfgrundlage eine Silikonkautschuk eingesetzt wird, in dem neben den weiter unten identifizierten Gruppen a. auch Gruppen b. und gleichzeitig Gruppen c. in einem definierten Mischungsverhältnis vorhanden sind.

Gegenstand der Erfindung sind thermoplastische Formmassen, enthaltend:

A. 5 - 98 Gew.-Teile, vorzugsweise 20 - 95 Gew.-Teile, eines oder mehrerer thermoplastischer Polycarbonate,

B. 2 - 70 Gew.-Teile, vorzugsweise 5 - 60 Gew.-Teile, eines oder mehrerer Pfropfpolymerisate aus

B.1 5 - 90 Gew.-Teilen, vorzugsweise 30 - 80 Gew.-Teilen, einer Mischung aus

B.1.1 50 - 95 Gew.-Teilen Styrol, α-Methylstyrol, kernsubstituiertem Styrol, Methylmethacrylat oder Mischungen daraus, und

B.1.2 50 - 5 Gew.-Teilen Acrylnitril, Methacrylnitril, Methylmethacrylat, Maleinsäureanhydrid, N-substituiertem Maleinimid oder Mischungen daraus, auf

B.2 95 - 10 Gew.-Teile, vorzugsweise 70 - 20 Gew.-Teile, eines Silikonkautschuks mit einem mittleren Teilchendurchmesser ($d_{50}$-Wert) von 0.09 bis 1 µm, bevorzugt 0.09 bis 0,4 µm und einem Gelgehalt größer 50 Gew.-%, bevorzugt größer 70 Gew.-%, und insbesondere 73-98 Gew.-%, enthaltend im wesentlichen Einheiten der allgemeinen Formeln

1. $R_2SiO$, $RSiO_{3/2}$, $R_2R^3SiO_{1/2}$, $SiO_{4/2}$ und

b. $R^1CH = CH-(R^2)$-und

c. H-S-

mit

R = einwertiger Kohlenwasserstoffrest, insbesondere gesättigter Kohlenwasserstoffrest oder aromatischer Kohlenwasserstoffrest, insbesondere $CH_3$, Phenyl, $C_2H_5$,

$R^1$ = H, $C_1$-$C_6$-Alkyl, insbesondere H, $CH_3$,

$R^2$ = Einfachbindung, $C_1$-$C_4$-Alkylen, insbesondere $-CH_2-$, $-C_2H_4-$, Einfachbindung

$R^3$ = R oder -OH,

worin auf 100 Mol-Einheiten der Formel $R_2SiO$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind, die Menge der Gruppen b.

und c. 2-10 Mol-%, bezogen auf die Summe aus a. + b. + c. beträgt, das Mol-Verhältnis der Gruppen b. zu c. zwischen 3:1 und 1:3, bevorzugt 2:1 und 1:2 liegt,
und

C. 0 - 80 Gew.-Teilen, vorzugweise 0 - 70 Gew.-Teilen, eines thermoplastischen Copolymerisates aus

C.1 50 - 95 Gew.-Teilen Styrol, α-Methylstyrol, kernsubstituiertem Styrol, Methylmethacrylat oder Mischungen daraus, und

C.2 50 - 5 Gew.-Teilen Acrylnitril, Methacrylnitril, Methylmethacrylat, Maleinsäureanhydrid, N-substituiertem Maleinimid oder Mischungen daraus.

Erfindungsgemäß geeignete, thermoplastische, aromatische Polycarbonate A sind solche auf Basis der Diphenole der Formel (I)

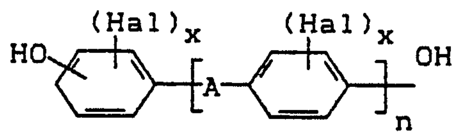

(I)

worin A eine Einfachbindung, ein $C_1$-$C_5$-Alkylen, ein $C_2$-$C_5$-Alkyliden, ein $C_5$-$C_6$-Cycloalkyliden, -S-oder -$SO_2$-, Hal Chlor oder Brom, x 0, 1 oder 2 und n 1 oder 0 sind, und gegebenenfalls zusätzlich der Formel (Ia)

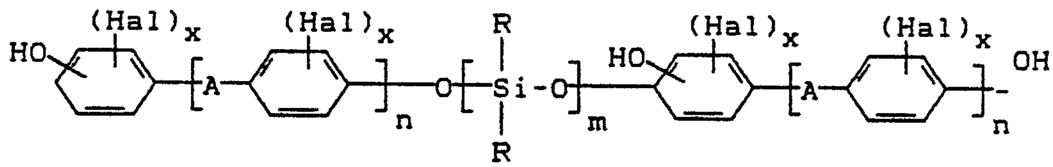

(Ia)

worin A, Hal, x und n die für Formel (I) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl, vorzugsweise $CH_3$, sind und m eine ganze Zahl zwischen 5 und 100, vorzugsweise zwischen 20 und 80, ist. Geeignet sind Homopolycarbonate von Diphenolen der Formel I und Copolycarbonate von Diphenolen der Formel I und Diphenolen der Formel (Ia) deren Gewichtsanteil in den Copolycarbonaten 1 bis 20 Gew.-%, vorzugsweise 1,5 bis 15 Gew.-% und insbesondere 2 bis 10 Gew.-%, bezogen auf die Gewichtssumme der eingesetzten Diphenole ist. Ebenfalls geeignet sind Mischungen aus einem Copolycarbonat auf Basis der Diphenole (Ia) und (I) und einem anderen siloxanfreien thermoplastischen Polycarbonat, wobei der Gehalt an Diphenol (Ia) in der Polycarbonatmischung, bezogen auf die gesamten Diphenole, zwischen 1 bis 20 Gew.-% ist.

Die Herstellung der erfindungsgemäß geeigneten Polycarbonate A ist bekannt und kann z.B. mit Phosgen nach dem Phasengrenzflächenverfahren oder mit Phosgen nach dem Verfahren in homogener Phase ("Pyridinverfahren") erfolgen, wobei das Molekulargewicht durch eine entsprechende Menge an bekannten Kettenabbrechern eingestellt wird (für polydiorganosiloxanhaltige Polycarbonate vgl. DE-OS 3 334 872).

Geeignete Kettenabbrecher sind z.B. Phenol, p-Chlorphenol, p-tert.-Butylphenol oder 2,4,6-Tribromphenol, sowie langkettige Alkylphenole, wie 4-(1,3-Tetramethylbutyl)-phenol gemäß DE-OS 2 842 005 oder Monoalkylphenol bzw. Dialkylphenole mit insgesamt 8 - 20 C-Atomen in den Alkylsubstituenten gemäß deutscher Patentanmeldung P 3 506 472.2 wie 3,6-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol.

Die erfindungsgemäß geeigneten Polycarbonate A haben Gewichtsmittelmolekulargewichte ($\overline{M}$w, gemessen, z.B. durch Ultrazentrifugation oder Streulichtmessung) von 10 000 bis 200 000, vorzugsweise 20 000 - 80 000.

Geeignete Diphenole der Formel (I) sind z.B. Hydrochinon, Resorcin, 4,4'-Dihydroxydiphenol, 2,2-Bis(4-hydroxyphenyl)-propan, 2,4-Bis-(4-hydroxyphenyl)-2-methylbutan, 1,1-Bis-(4-hydroxyphenyl)-cyclohexan, 2,2-Bis(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan,

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-Dibrom-4-hydroxyphenyl)-propan und 1,1-Bis-(4-hydroxyphenyl)-cyclohexan.

Besonders geeignete Diphenole der Formel (Ia) sind solche, in denen R $C_1$-$C_4$-Alkyl wie Methyl, Ethyl, Propyl, n-Butyl, tert.-Butyl oder Phenyl ist.

Bevorzugte Diphenole der Formel (Ia) entsprechen der Formel (Ib)

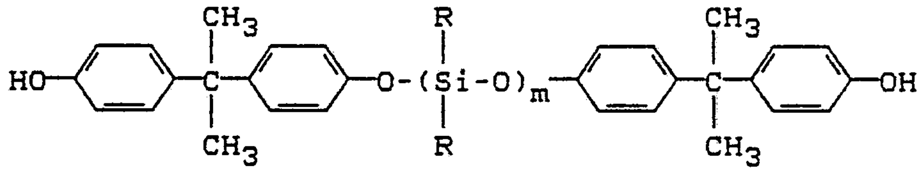

(Ib)

worin die Reste R gleich sind und $C_1$-$C_4$-Alkyl oder Phenyl bedeuten und m eine ganze Zahl zwischen 5-100, vorzugsweise zwischen 20 und 80, ist.

Die Diphenole der Formel (Ia) können z.B. aus den Bis-Chlorverbindungen (II)

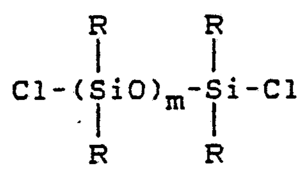

(II)

und den Diphenolen (I) z.B. gemäß US-PS 3 419 634, Spalte 3, in Kombination mit US-PS 2 189 662 hergestellt werden.

In den Bis-chlorverbindungen (II) haben R und m die Bedeutung wie in den Diphenolen (Ia) bzw. (Ib).

Die erfindungsgemäß geeigneten Polycarbonate A können in bekannter Weise verzweigt sein, vorzugsweise durch den Einbau von 0,05 - 2,0 Mol-%, bezogen auf die Summe der eingesetzten Diphenole, an drei-oder mehr als dreifunktionellen Verbindungen, z.B. solchen mit drei oder mehr als drei phenolischen Gruppen.

Bevorzugte Polycarbonate sind neben dem Bisphenol A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan oder die Copolycarbonate der Diphenole der Formel (I) mit 1-20 Gew.-% an Diphenolen der Formel (Ia), vorzugsweise der Formel (Ib), bezogen jeweils auf die Gewichtssumme der Diphenole (I) und (Ia) bzw. (I) und (Ib).

Der Silikonkautschuk als Grundlage zur Herstellung des Pfropfcopolymeren enthält Einheiten der allgemeinen Formeln

a. $R_2SiO$, $RSiO_{3/2}$, $R_2R^3SiO_{1/2}$, $SiO_{4/2}$ und

b. $R^1CH=CH-(R^2)$-und

c. H-S-R ist ein einwertiger Kohlenwasserstoffrest, bevorzugt ein gesättigter Kohlenwasserstoffrest oder ein aromatischer Rest, insbesondere $CH_3$, Phenyl, $C_2H_5$,

$R^1$ ist H oder $C_1$-$C_6$-Alkyl, insbesondere $CH_3$,

$R^2$ ist eine Einfachbindung oder $C_1$-$C_4$-Alkylen,

insbesondere $-C_2H_4-$, $-CH_2-$oder Einfachbindung, $R^3$ ist R oder -OH.

Die Mengen der einzelnen Siloxaneinheiten sind dabei so bemessen, daß auf 100 Mol-Einheiten der Formel $R_2SiO$ 0 bis 0,5 Mol-Einheiten $R_2R^3SiO_{1/2}$, 0 bis 10 Mol Einheiten der Formel $RSiO_{3/2}$ und 0 bis 3 Mol-Einheiten der Formel $SiO_{4/2}$ vorhanden sind.

In bevorzugten Silikonkautschuken sind mindestens 80 % der Reste R $CH_3$-Gruppen.

Im Falle der Gruppe $R_2R^3SiO_{1/2}$ -die die Endgruppe der Silikonkautschuks ist - kann einer der organischen Reste eine Hydroxylgruppe darstellen. Besonders bevorzugte Endgruppe ist die Dimethylhydroxylsiloxyeinheit.

Die Silikonkautschuke enthalten zusätzlich die Gruppen b. und c. in einer Gesamtmenge von 2 bis 10 Mol-%, bezogen auf alle Reste R. Das molare Verhältnis von b. zu c. ist 3:1 bis 1:3, vorzugsweise 2:1 bis 1:2.

Sind nur Reste b oder Reste c., in dem Silikonkautschuk eingebaut vorhanden, so kommt es bei der weiteren Verarbeitung (von aus den Kautschuken hergestellten Pfropfpolymerisaten zu Thermoplastformkörpern) zu Unverträglichkeit, die sich z.B. in unzureichender Qualität der Formkörperoberflächen äußert.

Besonders geeignete Gruppen b. sind Vinyl-und Allyl-Gruppen. Die Gruppe c. ist S-H-, die vorzugsweise über Mercaptoalkyl-, insbesondere Mercaptopropyl, eingebracht ist.

Die Silikonkautschuke sind teilchenförmig und besitzen mittlere Teilchendurchmesser ($d_{50}$-Wert) von 0,09 - 1 µm, vorzugsweise 0,09 - 0,4 µm, sind wenigstens teilvernetzt, d.h. sie besitzen Gelgehalte von größer 50 Gew.-%, vorzugsweise größer 70 Gew.-%, insbesondere im Bereich von 73 - 98 Gew.-%.

Die Pfropfpolymerisate B werden durch radikalische Pfropfpolymerisation der eingangs definierten Monomerengemische aus B.1.1 und B.1.2 in Gegenwart der zu pfropfenden Kautschuke B.2 hergestellt.

Als kernsubstituierte Styrole seien Halogenstyrole und p-Methylstyrol erwähnt.

Die Pfropfmonomeren B.1.1 und B.1.2 liegen wenigstens teilweise auf dem Silikonkautschuk aufgepfropft vor. In besonders bevorzugten Pfropfpolymerisaten sind mehr als 50 Gew.-% der Monomeren gepfropft.

Die erfindungsgemäßen Pfropfpolymerisate sind wie folgt herstellbar: zunächst wird in einer ersten Stufe durch Emulsionspolymerisation eines Silikonoligomeren der Silikonkautschuk hergestellt.

Die Herstellung einer Emulsion eines langkettigen OH-terminierten Silikonöls durch Emulsionspolymerisation ist dem Fachmann im Prinzip geläufig. Beispielhaft wird hierzu auf die US-PS 2 891 910 sowie auf die GB-PS 1 024 024 verwiesen. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgiermittelkonzentration gering gehalten werden, und man hat nach Fertigstellung der Emulsion wenig störende Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Derartige Co-Emulgatoren können nichtionischer sowie anionischer Natur sein. Als anionische Co-Emulgatoren kommen insbesondere Salze der obengenannten n-Alkyl-oder Alkylbenzolsulfonsäuren in Frage. Nichtionogene Co-Emulgatoren sind Polyoxyethylenderivate von Fettalkoholen und Fettsäuren. Beispiele für derartige Emulgiermittel sind POE (3)-Laurylalkohol, POE (20)-Oleylalkohol, POE (7)-Nonylphenol oder POE (10)-Stearat (die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt).

Im allgemeinen sind Siliconöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Silikonöls erfolgt z.B. über die Temperatur bei der Gleichgewichtsbildung zwischen Siloxan, Wasser und dem durch Ringöffnung des Siloxans zunächst gebildeten Silanol (bezüglich Einzelheiten zum Zusammenhang zwischen Temperatur und Molekulargewicht wird auf die Arbeit von D.R. Weyenberg et al., J. Polymer Sci. Part C, 27 pp 28 - 34 (1969) verwiesen).

Gruppen b und c. können in das Siliconpolymer durch Arbeiten in Anwesenheit geeigneter Siloxanoligomerer eingefügt werden. Geeignete Ausgangsoligomere sind z.B. Tetramethyltetravinylcyclotetrasiloxan oder γ-Mercaptopropylmethyldimethoxisilan oder dessen Hydrolysat.

Diese funktionellen Oligomere werden dem Hauptoligomer Octamethylcyclotetrasiloxan in den gewünschten Mengen beigefügt.

Analog kann auch der Einbau längerkettiger Alkylreste R, wie z.B. Ethyl-, Propyl oder dgl. bzw. der Einbau von Phenylgruppen erreicht werden.

Der Siliconkautschuk muß wenigstens teilweise vernetzt sein.

Eine ausreichende Vernetzung kann schon erreicht werden, wenn die bevorzugte eingesetzten Vinyl- und Mercaptopropylgruppen bei der Emulsionspolymerisation miteinander reagieren, so daß die Zugabe eines externen Vernetzers entbehrlich sein kann. Jedoch kann ein Vernetzung bewirkendes Silan zugefügt werden, um den Vernetzungsgrad des Silikonkautschukes zu erhöhen.

Verzweigungen oder Vernetzungen können durch Zugabe von z.B. Tetraethoxisilan oder eines Silans der allgemeinen Formel $RSiX_3$, wobei X eine hydrolysierbare Gruppe, insbesondere den Alkoxyrest darstellt, erzielt werden. R hat die oben beschriebene Bedeutung. Bevorzugt sind R = Methyl und R = Phenyl. Insbesondere bevorzugt sind neben Tetraethoxysilan Methyltrimethoxysilan oder Phenyltrimethoxysilan.

Zur Herstellung des Pfropfcopolymerisate B können die Pfropfmonomeren B.1.1 und B.1.2 in Anwesenheit des Silikonkautschuks radikalisch pfropfpolymerisiert werden, insbesondere bei 40 bis 90°C. Die Pfropfpolymerisation kann in Suspension, Dispersion oder Emulsion durchgeführt werden. Bevorzugt ist die kontinuierliche oder diskontinuierliche Emulsionspfropfpolymerisation. Diese Pfropfpolymerisation wird unter Einsatz von Radikalinitiatoren durchgeführt (aus der Gruppe der Peroxide, Azoverbindungen, Hydroperoxide, Persulfate, Perhphosphate) sowie auch gegebenenfalls unter Einsatz von anionischen Emulgatoren

z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisats der Monomeren B 1 wird an den Silikonkautschuk B 2 chemisch gebunden. Dieser besondere Siliconkautschuk B 2 macht besondere Maßnahmen (die eine hohe Pfropfung ermöglichen) überflüssig.

Die so hergestellten Pfropfpolymerisate können nach bekannten Verfahren aufgearbeitet werden, z.B. durch Koagulation der Latices mit Elektrolyten (Salze, Säuren oder Gemische davon) und anschließende Reinigung und Trocknung.

Bevorzugte Copolymerisate C sind solche aus wenigstens einem Monomeren aus der Reihe Styrol, α-Methylstyrol, kernsubstituiertem Styrol gemäß C.1 mit wenigstens einem Monomeren aus der Reihe Acrylnitril, Methacrylnitril, Methylmethacrylat, Maleinsäureanhydrid, N-subst.-Maleinimid gemäß C.2.

Copolymerisate C entstehen häufig bei der Pfropfpolymerisation zur Herstellung der Komponente B als Nebenprodukte, besonders dann, wenn große Mengen Monomere auf kleine Mengen Kautschuk gepfropft werden.

Die erfindungsgemäß einzusetzende Menge an Copolymerisat C von 0 bis 80 Gew.-Teilen, bezieht diese Nebenprodukte der Pfropfpolymerisation nicht mit ein.

Die Copolymerisate C sind harzartig, thermoplastisch und kautschukfrei. Besonders bevorzugte Copolymerisate C sind solche aus Styrol und/oder α-Methylstyrol mit Acrylnitril und gegebenenfalls mit Methylmethacrylat.

Besonders bevorzugte Gewichtsverhältnisse im thermoplastischen Copolymerisat C sind 60 - 80 Gew.-% C.1 und 40 - 20 Gew.-% C.2.

Die Copolymerisate C sind bekannt und lassen sich durch radikalische Polymerisation, insbesondere durch Emulsions-, Suspensions-, Lösungs-oder Massepolymerisation herstellen. Die Copolymerisate C besitzen vorzugsweise Molekulargewichte $\overline{M}w$ (Gewichtsmittel, ermittelt durch Lichtstreuung oder Sedimentation) zwischen 15 000 und 200 000.

Die erfindungsgemäßen Formmassen können weitere, für Polycarbonate, Pfropfpolymerisate oder thermoplastische Copolymerisate bekannte Zusätze, wie Stabilisatoren, Pigmente, Entformungsmittel, Flammschutzmittel und Antistatika, in den üblichen Mengen enthalten.

Die erfindungsgemäßen Formmassen können hergestellt werden, indem man die Bestandteile in bekannter Weise vermischt und bei Temperaturen von 200 - 330°C in üblichen Vorrichtungen, wie Innenknetern, Extrudern oder Doppelwellenschnecken, schmelzcompoundiert oder schmelzextrudiert.

Gegenstand der Erfindung ist somit auch ein Verfahren zur Herstellung von thermoplastischen Formmassen, enthaltend Polycarbonat A, Pfropfpolymerisat B und Copolymerisat C sowie gegebenenfalls Stabilisatoren, Pigmente, Entformungsmittel, Flammschutzmittel und/oder Antistatika, das dadurch gekennzeichnet ist, daß man diese Bestandteile vermischt und dann bei 200 bis 330°C in gebräuchlichen Vorrichtungen schmelzcompoundiert und/oder schmelzextrudiert.

Die Bestandteile können sukzessive oder simultan gemischt werden bei etwa 20°C (Raumtemperatur) bis etwa 100°C.

Die Formmassen der vorliegenden Erfindung können zur Herstellung von Formkörpern jeder Art z.B. durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe, Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Teilchengröße oder -durchmesser bedeutet immer mittlere Teilchendurchmesser $d_{50}$, ermittelt durch Ultrazentrifugenmessungen nach W. Scholten et. al., Kolloid-Z. u. Z. Polymere 250 (1972), 782 - 796.

## Beispiele

Bestandteile A und C

A. Lineares Polycarbonat auf Basis Bisphenol A mit einer relativen Lösungsviskosität $\eta_{rel}$ von 1,26 - 1,28, gemessen in $CH_2Cl_2$ bei 25°C und in einer Konzentration von 0,5 g/100 ml.

C. Styrol/Acrylnitril-Copolymerisat mit einem Styrol/Acrylnitril-Verhältnis von 72:28 und einer Grenzviskosität von $(\eta)$ = 0,55 dl/g (Messung in Dimethylformamid bei 20°C).

Herstellung des Pfropfpolymerisats B

1. Herstellung von Silikon-Kautschukemulsionen

1.1 38,4 Gew.-Teile Octamethylcyclotetrasiloxan, 1,2 Gew.-% Teile Tetramethyltetravinylcyclotetrasiloxan und 1 Gew.-Teil γ-Mercaptopropylmethyldimethoxysiloxan werden miteinander verrührt. 0,5 Gew.-Teile Dodecylbenzolsulfonsäure werden zugefügt, anschließend 58,4 Gew.-Teile Wasser innerhalb 1 Stunde zugegeben. Dabei wird intensiv gerührt. Die Voremulsion wird mit Hilfe einer Hochdruckemulgiermaschine 2 mal bei 200 bar homogenisiert. Man gibt weitere 0,5 Gew.Teile Dodecylbenzolsulfonsäure hinzu.
Die Emulsion wird 2 Stunden bei 85°C und anschließend 36 Stunden bei 20°C gerührt. Neutralisiert wird mit Hilfe von 5 n-NaOH. Es resultiert eine stabile Emulsion mit einem Feststoffgehalt von ca. 36 Gew.-%. Das Polymer besitzt ein Gelgehalt von 82 Gew.-%, gemessen in Toluol; die mittlere Teilchengröße beträgt ca. 300 nm.

1.2 Eine weitere Emulsion wird wie unter 1 beschrieben hergestellt, die zusätzlich zu den Bestandteilen des Beispiels 1.1 0,2 Gew.-Teile Tetraethoxysilan enthält.

1.3 Eine weitere Emulsion wird wie unter 1 beschrieben hergestellt, die die Bestandteile des Beispiels 1 enthält, mit Ausnahme des γ-Mercaptopropylmethyldiethoxysilans (führt nicht zu erfindungsgemäßen Blends).

1.4 Eine weitere Emulsion wird wie unter 1 beschrieben hergestellt, die die Bestandteile des Beispiels 1 enthält, mit Ausnahme des Tetramethyltetravinylcyclotetrasilans (führt nicht zu erfindungsgemäßen Blends).

2. Herstellung der Pfropfpolymerisate B

B.1 In einem Reaktor werden vorgelegt:

2107 Gew.-Tl. Latex 1.1
1073 Gew.-Tl. Wasser.
Nach Initiierung mittels einer Lösung von 7,5 Gew.-Teilen Kaliumperoxodisulfat in 195 Gew.-Teilen Wasser bei 65°C werden folgende Lösungen in den Reaktor innerhalb von 4 Stunden gleichmäßig eingespeist:

Lösung 1:
540 Gew.-Teile Styrol
210 Gew.-Teile Acrylnitrol

Lösung 2:
375 Gew.-Teile Wasser
15 Gew.-Teile Natriumsalz von $C_{14}$-$C_{18}$-Alkylsulfonsäuren.
Anschließend wird innerhalb von 6 Stunden bei 65°C auspolymerisiert. Es resultiert ein Latex mit einem Feststoffgehalt von ca. 33 Gew.-%.
Nach Koagulation mit einer wäßrigen Magnesiumchlorid/Essigsäure-Lösung, Filtration und Trocknung im Vakuum wird das Pfropfpolymerisat in Form eines weißen Pulvers erhalten.

B.2-B.4 Analog der Beschreibung B.1 werden Pfropfpolymerisate aus Emulsionen 1.2; 1.3 und 1.4 hergestellt.

B.5 Pfropfpolymerisat aus 50 Gew.-% grobteiligem vernetztem Polybutadien und 50 Gew.-% Styrol/Acrylnitril-Mischung in einem Styrol/Acrylnitril-Verhältnis von 72:28, hergestellt durch Emulsionspolymerisation; mittlere Teilchengröße ($d_{50}$) von 400 nm.

B.6 Ein ASA-Pfropfpolymerisat aus 60 Gew.-% großteiligem, hochvernetztem Acrylatkautschuk und 40 Gew.-% einer Styrol/Acrylnitril-Mischung im Gewichtsverhältnis 72:28 mit einer mittleren Teilchengröße ($d_{50}$) von ca. 400 nm. Das Produkt wurde hergestellt gemäß EP 34748.

Herstellung der erfindungsgemäßen Formmassen

Die Komponenten A, B und C werden in einem 3-1-Innenkneter bei Temperaturen von 200 - 220°C compoundiert.

Die Formkörper werden, soweit nicht anders angegeben, auf einer Spritzgießmaschine bei 260°C hergestellt.

Die Kerbschlagzähigkeit wurde nach Methode Izod an Stäben der Abmessung 2,5 × 1/2 × 1,8″ gemäß ASTM-D-256, bei Raumtemperatur, -20°C, -40°C, -50°C bzw. -60°C gemessen.

Die Formkörperoberfläche wurde visuell an Stäben der Abmessung 2,5 × 1/2 × 1/8″ bzw. an Plättchen der Abmessung 60 × 90 × 2 mm beurteilt.

Wie nachfolgende Tabelle zeigt, werden nur mit den erfindungsgemäßen Pfropfpolymerisaten Mischungen erhalen, die eine gute Oberflächenqualität, und gegenüber dem Stand der Technik verbesserte Tieftemperaturzähigkeiten besitzen.

**Tabelle**

| A | B.1 | B.2 | B.3 | B.4 | B.5 | B.6 | C | Oter- | Kerbschlagzähigkeit nach Izod J/m | | | | |
|---|---|---|---|---|---|---|---|---|---|---|---|---|---|
| | | Gew.-Teile | | | | | | fläche* | Raumtemp. | -20° C | -40° C | -50° C | -60° C |
| erfindungsgemäß | | | | | | | | | | | | | |
| 45 | 33 | | | | | | 22 | + | 610 | 428 | 371 | 330 | 297 |
| 60 | 24 | | | | | | 16 | + | 748 | 627 | 540 | 511 | 474 |
| 60 | | 24 | | | | | 16 | + | 677 | 517 | 462 | - | - |
| Vergleichsbeispiele | | | | | | | | | | | | | |
| 60 | | | 24 | | | | 16 | - | 587 | 464 | 415 | - | - |
| 60 | | | | 24 | | | 16 | - | 193 | 107 | - | - | - |
| 45 | | | | | 33 | | 22 | + | 594 | 525 | 295 | - | - |
| 60 | | | | | 24 | | 16 | + | 565 | 479 | 403 | - | - |
| 60 | | | | | | 20 | 20 | + | 764 | 250 | - | - | - |

* + einwandfrei; - Oberflächenschlieren/-störungen

**Ansprüche**

1. Thermoplastische Formmassen, enthaltend

A. 5 - 98 Gew.-Teile eines oder mehrerer thermoplastischer Polycarbonate,

B. 2 - 70 Gew.-Teile eines oder mehrerer Pfropfpolymerisate aus

B.1 5 - 90 Gew.-Teile einer Mischung aus

B.1.1 50 - 95 Gew.-Teilen Styrol, α-Methylstyrol, kernsubstituiertem Styrol, Methylmethacrylat oder Mischungen daraus, und

B.1.2 50 - 5 Gew.-Teilen Acrylnitril, Methacrylnitril, Methylmethacrylat, Maleinsäureanhydrid, N-substituiertem Maleinimid oder Mischungen daraus, auf

B.2 95 - 10 Gew.-Teilen eines Siliconkautschuks, mit einem mittleren Teilchendurchmesser ($d_{50}$) von 0.09 bis 1,0 µm und einem Gelgehalt größer 50 Gew.-%, enthaltend im wesentlichen Einheiten der allgemeinen Formel

a. $R_2SiO$, $RSiO_{3/2}$, $R_2R^3SiO_{1/2}$, $SiO_{4/2}$ und

b. $R^1CH = CH-(R^2)$-und

c. H-S-

mit

R = einwertiger Kohlenwasserstoffrest,

$R^1$ = H, $C_1$-$C_6$-Alkyl,

$R^2$ = Einfachbindung, $C_1$-$C_4$-Alkylen,

$R^3$ = R oder -OH,

worin auf 100 Mol-Einheiten der Formel $R_2SiO$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind, die Menge der Gruppen b. und c., bezogen auf die Summe aus a + b + c 2 bis 10 Mol-% beträgt, und das Molverhältnis der Gruppen b:c = 3:1 bis 1:3 ist.

C. 0 - 80 Gew.-Teile eines thermoplastischen Copolymerisates aus

C.1 50 - 95 Gew.-Teilen Styrol, α-Methylstyrol, kernsubstituiertem Styrol, Methylmethacrylat oder Mischungen daraus, und

C.2 50 - 5 Gew.-Teilen Acrylnitril, Methacrylnitril, Methylmethacrylat, Maleinsäureanhydrid, N-substituiertem Maleinimid oder Mischungen daraus.

2. Thermoplastische Formmassen gemäß Anspruch 1, dadurch gekennzeichnet, daß in B.2 das Molverhältnis b:c = 2:1 bis 1:2.

3. Thermoplastische Formmassen gemäß Anspruch 1 und 2, dadurch gekennzeichnet, daß der mittlere Teilchendurchmesser der Silikonkautschukpfropfpolymerisate B. zwischen 0,09 und 0,4 µm liegt.

4. Formmassen gemäß Anspruch 1, dadurch gekennzeichnet, daß A ein Copolycarbonat mit einem Gehalt von 1 - 20 Gew.-% an Diphenolen der Formel (Ia)

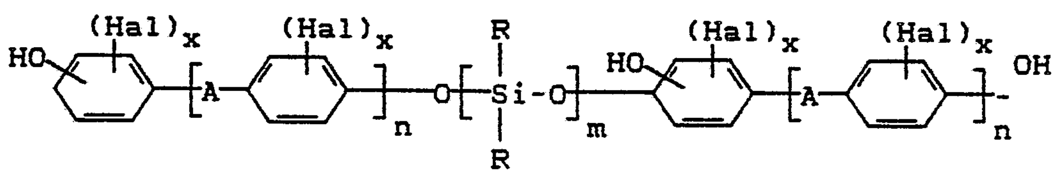

(Ia)

mit X = 0,1 oder 2, n = 0 oder 1, m = ganze Zahl von 5 bis 100, Hal = Halogen, A = Einfachbindung, $C_1$-$C_5$-Alkylen, $C_2$-$C_5$-Alkyliden, $C_5$-$C_6$-Cycloalkyli den, -S-, $-SO_2-$, R = gleiches oder verschiedenes lineares $C_6$-$C_{20}$ Aryl, verzweigtes $C_2$-$C_{20}$ Alkyl, bezogen auf das Gesamtgewicht der eingesetzten Diphenole ist.

5. Formmassen gemäß Anspruch 1-5, dadurch gekennzeichnet, daß A ein Gemisch aus einem Bisphenol A-Polycarbonat und einem Copolycarbonat des Anspruchs 4 ist.

6. Formmassen gemäß Anspruch 1, dadurch gekennzeichnet, daß sie mindestens einen Zusatz, ausgewählt aus der Gruppe der Stabilisatoren, Pigmente, Entformungsmittel, Flammschutzmittel und Antistatika, enthalten.

7. Verfahren zur Herstellung der Formmassen gemäß Anspruch 1, dadurch gekennzeichnet, daß man die Komponenten A, B und C vermischt und dann bei Temperaturen von 200 - 300°C in gebräuchlichen Vorrichtungen schmelzcompoundiert und/oder schmelzextrudiert.